(19) Europäisches Patentamt

European Patent Office

Office européen des brevets

(11) **EP 0 749 239 B1**

(12) **EUROPÄISCHE PATENTSCHRIFT**

(45) Veröffentlichungstag und Bekanntmachung des Hinweises auf die Patenterteilung:
**02.08.2000  Patentblatt 2000/31**

(51) Int Cl.$^7$: **H04N 7/088**, H04N 7/085

(21) Anmeldenummer: **96107459.8**

(22) Anmeldetag: **10.05.1996**

(54) **Verfahren und Vorrichtung zur Zusatzdatenübertragung in TV-Kanälen**

Method and device for supplementary data transmission in TV channels

Méthode et dispositif de transmission de données supplémentaires dans des canaux de télévision

(84) Benannte Vertragsstaaten:
**AT BE CH DE DK ES FI FR GB GR IE IT LI LU MC NL PT SE**

(30) Priorität: **16.06.1995  DE 19522590**

(43) Veröffentlichungstag der Anmeldung:
**18.12.1996  Patentblatt 1996/51**

(73) Patentinhaber: **Deutsche Telekom AG**
**53113 Bonn (DE)**

(72) Erfinder:
• **Lorenz, Rudolf-Werner, Dr.-Ing.**
  **64401 Gross-Bieberau (DE)**
• **Götting, Oliver, Dipl.-Ing.**
  **01307 Dresden (DE)**
• **Finger, Adolf, Prof. Dr. habil.**
  **01187 Dresden (DE)**
• **Schönthier, Jens, Dipl.-Ing.**
  **01309 Dresden (DE)**
• **Hiller, Hartmut, Dr.-Ing. habil.**
  **01705 Freital (DE)**
• **Poegel, Frank, Dipl.-Ing.**
  **01279 Dresden (DE)**

(56) Entgegenhaltungen:
DE-A- 2 516 742        DE-A- 2 529 728
DE-A- 2 901 034        DE-A- 3 103 406
DE-A- 3 732 111

EP 0 749 239 B1

**Beschreibung**

Die Erfindung bezieht sich auf ein Verfahren zur Übertragung von

Zusatzdaten in TV-Bildern nach Anspruch 1, auf eine Sendevorrichtung nach

Anspruch 9, eine Empfangsvorrichtung nach Anspruch 13 und auf ein System

nach Anspruch 17 zur Durchführung des Verfahrens.

Es sind Verfahren und Vorrichtungen z.B. für Audiodaten aus Gassmann/Eckert: "Das COM-System", Funkschau 1970, Heft 20, Seiten 689 bis 692 und Heft 21, Seiten 749 bis 750 und für Videodaten aus Langenkamp/Löwy: "Megatext-IC für Videotext und Grafik" RFE 1994 Heft 7, Seiten 18 bis 20 bekannt.

Die Eigenschaften des FBAS-Signales (Farb-, Bild-, Ablenk- und Synchronsignal) lassen die Möglichkeit offen, weitere informationstragende Signale (Zusatzdaten) zu überlagern, wobei der Empfang des TV-Rundfunkprogramms nicht gestört werden darf. Während sich die meisten Veröffentlichungen nur mit einer Art von Zusatzdaten befassen, ist z. B. in Rudolf Meusel: "Fernsehtechnik", Hüttig 1991, im 9. Kapitel auf den Seiten 210 bis 227 die Übertragung mehrerer zusätzlicher Prüf- und Datensignale beschrieben. Die Übertragung der Zusatzdaten erfolgt mit hoher Übertragungssicherheit und einer möglichst hohen Übertragungsrate.

Die Rundfunksatellitentechnik ermöglicht zwar den Empfang einer immer größeren Zahl von Fernsehprogrammen, bietet aber lokalen Programmanbietern wegen der großen Ausleuchtzonen und der hohen Kosten keine Möglichkeiten für regionale Dienste. Breitbandkommunikationsnetze sind dagegen für portable Geräte und Empfangsstellen mit großen Abständen ungeeignet. Die terrestrische Sendernetzinfrastruktur enthält bereits überwiegend in den bildfreien Zeilen Prüfzeilen und Videotext. Drahtlose Zusatzdienste scheitern vielfach an zu hohen Kosten für Fernsehstudios und Frequenzknappheit.

Aus der DE-OS 25 16 742 ist ein Fernsehsystem bekannt, mit dem digitalisierte Tonsignale während der Dauer der hinteren Schwarzschulter übertragen werden. Um eine höhere Datenrate übertragen zu können, wird das jeweilige FBAS-Signal derart modifiziert, daß die hintere Schwarzschulter auf Kosten der Dauer des Horizontal-Synchronimpulses verlängert wird. Das modifizierte FBAS-Signal und die digitalisierten Tonsignale werden einem Addierer zugefügt, der die digitalisierten Tonsignale in die verlängerte hintere Schwarzschulter einfügt.

Aus der DE-OS 31 03 406 A ist ein Verfahren zur Übertragung digitalisierter Tonsignale in der Horizontal-Austastlücke eines Videosignals bekannt. Allerdings beschäftigt sich diese Entgegenhaltung nicht mit dem Problem, die farb- und/oder bildsignalfreien Zeitabschnitte eines FBAS-Signals optimaler für die Übertragung von Zusatzdaten verfügbar zu machen.

Aus der DE-OS 37 32 111 ist ein Verfahren zur Laufzeitanpas- sung von Video- und Audiosignalen an ein Referenzsignal bekannt. Nach dem bekannten Verfahren wird vor einem Einschreiben des Videosignals in den Speicher eines Videosynchronisators das Audiosignal in den Bereich der Austastlücken des Videosignals eingefügt. In dem Speicher des Videosynchronisators werden Video- und Audiosignal gleichzeitig verarbeitet. Nach dem Auslösen des verarbeiteten Signals wird das eingefügte Audiosignal wieder vom Videosignal getrennt. Auch diese Schrift beschäftigt sich nicht mit dem Problem, die farb- und/oder bildsignalfreien Zeitabschnitte des FBAS-Signals zur Übertragung von Zusatzdaten besser ausnutzen zu können.

Aus der DE-OS 29 01 034 ist ein Verfahren und eine Schaltungsanordnung zur Komprimierung und Dekomprimierung von Analogsignalen in digitaler Form offenbart. Zwar werden die komprimierten Digitalsignale in die freien Informationslücken von Videosignalen eingeschoben oder anstelle von Fernsehsignalen übertragen. Jedoch finden sich in dieser Schrift keine Hinweise noch Anregungen darüber, wie die farb- und/oder bildsignalfreien Zeitabschnitte eines FBAS-Signals für die Übertragung von Zusatzdaten besser nutzbar gemacht werden können.

Die Erfindung hat sich die Aufgabe gestellt, die ungenutzte Kanalkapazität des TV-Kanals noch optimaler zu nutzen und dabei hohe Übertragungssicherheit, hohe Übertragungsraten, hohe Systemvariabilität, störfreien Empfang des TV-Programms, die Überlagerung der Zusatzdaten ohne technischen Eingriff in die TV-Sendermodule und die Kompatibilität existierender TV-Geräte für PALplus, NTSC und SECAM zu gewährleisten.

Die Erfindung löst diese Aufgabe mit einem Verfahren, das im Kennzeichen des Patentanspruchs 1 beschrieben ist.

Vorteilhafte Weiterbildungsmöglichkeiten des Verfahrens, mit denen neben dem senderseitigem Zusatz auch eine empfängerseitige hardwareseitige Realisierung erleichtert wird, sind in den Kennzeichen der Patentansprüche 2 bis 8 beschrieben.

Geeignete Sendevorrichtungen sind in den Ansprüchen 9 bis 12 und Empfangsvorrichtungen in den Ansprüchen 13 bis 16 beschrieben, die auch für eine hardwareseitige Realisierung, und als Zusatz für bestehende Sender und Empfänger des Bildrundfunknetzes geeignet sind.

Ein System zur Übertragung von Zusatzdaten in TV-Bildern ist im Patentanspruch 17 beschrieben.

Dieses Verfahren eignet sich mit seinen Elementen Auszählen, Bewerten und Entscheiden ohne weiteres für eine zusätzliche Realisierung in Rechnern, die für Multimediazwecke auch mit TV-Empfangskarten ausgerüstet sein können.

Durch die Erfindung werden die informationstragenden Signale für die Zusatzdatenübertragung mit einer Überlagerungsschaltung so zusammengefügt, daß in allen farb- und bildsignalfreien Zeitabschnitten Signale programmiert positioniert werden können.

Das erfindungsgemäße Zusatzdatenübertragungssystem weist eine Reihe von Vorteilen auf. Durch die Auswahl mit Auszählen und Bewerten kann bei der Entscheidung über die Nutzung der Zeitabschnitte für die Zusatzdatenübertragung so konfiguriert werden, daß keine Störungen beim Empfang des Fernsehrundfunks auftreten. Die Überlagerung und der Empfang der informationstragenden Zusatzdatensignale können mit kleinen, wenig aufwendigen Zusatzgeräten erfolgen. Die Übertragungsrate kann bei Bedarf an die Gegebenheiten des realen Kanals durch Programmierung angepaßt werden. Die Zusatzdatenübertragung wird mit Signalpegeln kleiner 20 mV realisiert, wodurch die Kompatibilität der handelsüblichen TV-Geräte gesichert ist.

Nachfolgend wird die Erfindung anhand eines Beispiels und mit Bezug auf die zugehörenden Zeichnungen näher erläutert, wobei

Fig. 1: den sendeseitigen Zusatzdatenaddierer,

Fig. 2: den empfangsseitigen Zusatzdatenempfänger,

Fig. 3: das Signaldiagramm zur Überlagerung von FBAS-Signal und Zusatzdatensignal für den ersten Zeilentyp,

Fig. 4: das Signaldiagramm zur Überlagerung von FBAS Signal und Zusatzdatensignal für einen zweiten Zeilentyp,

Fig. 5: das Signaldiagramm zum Empfang des Zusatzdatensignals für den ersten Zeilentyp und

Fig. 6: das Signaldiagramm zum Empfang des Zusatzdatensignals für einen zweiten Zeilentyp darstellt.

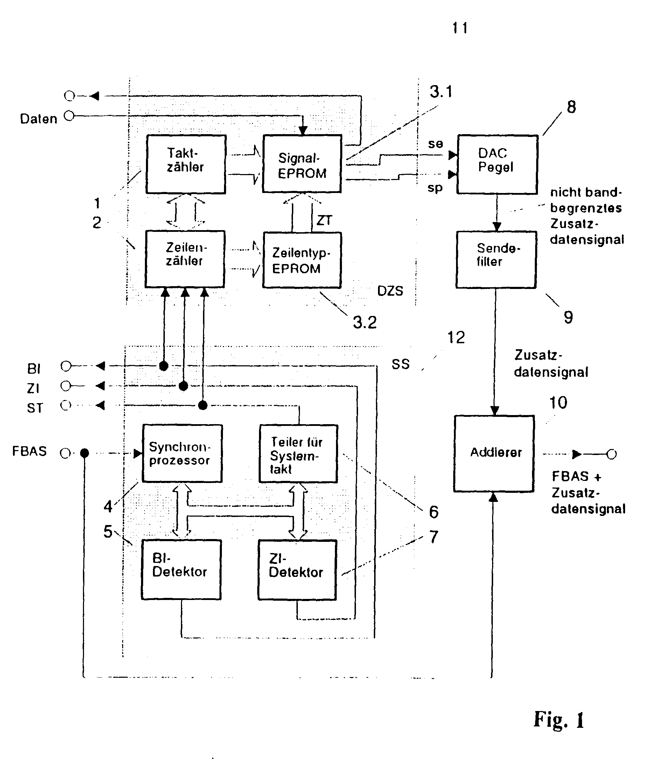

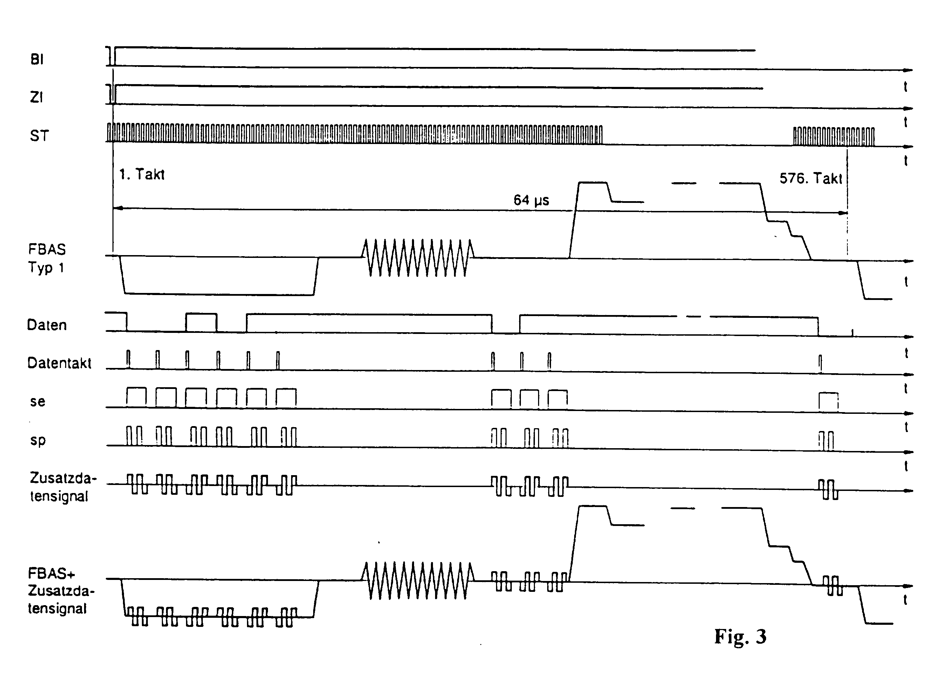

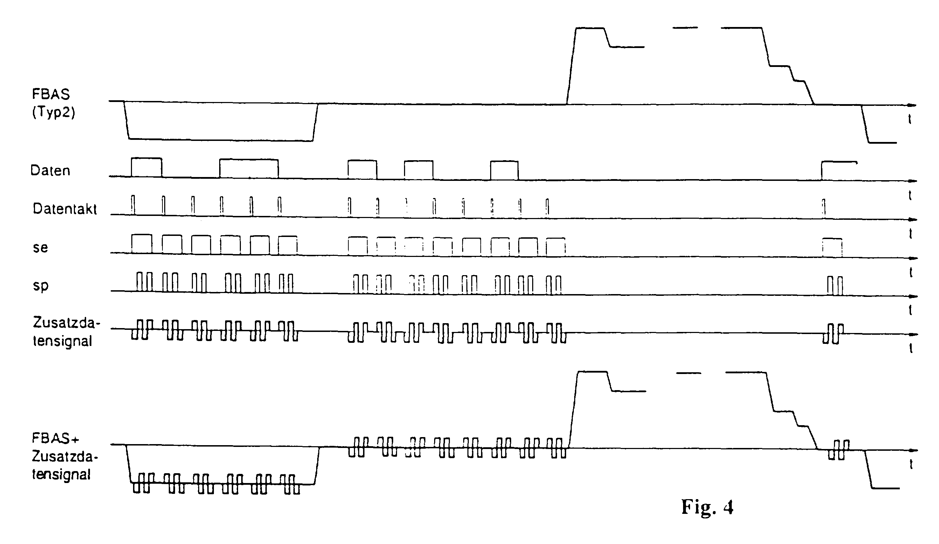

Fig. 1 zeigt den datengesteuerten zeilenselektiven Spreizfolgengenerator 11, der ein Spreizfolgensignal sp und ein Spreizerlaubnissignal se ausgibt (Fig. 3 und 4), welches im Digital-Analog-Converter 8 in ein dreiwertiges Zusatzdatensignal der Pegel 0,+ und - umgesetzt wird.

Das am Ausgang des Digital-Analog-Converters 8 enthaltene nicht bandbegrenzte Zusatzdatensignal wird durch die Wirkung des Sendefilters 9 auf die Videobandbreite begrenzt und im Addierer 10 mit dem FBAS-Signal des ersten bzw. eines anderen Zeilentyps überlagert. Der datengesteuerte zeilenselektive Spreizfolgengenerator 11 wird von den zu übertragenden Daten, die durch den im Signal-EPROM 3.2 abgelegten Datentakt aufgerufen werden, und durch die Zeitsteuersignale Bildimpuls BI, Zeilenimpuls ZI und dem Systemtakt ST der Sendersynchronisation 12 gesteuert.

Der Bildimpuls BI tritt zu Beginn eines jeden Bildes, der Zeitimpuls ZI zu Beginn einer jeden Zeile auf. Bildimpulsfrequenz und Systemtaktfrequenz sind dabei phasenstarr miteinander gekoppelt. Mit dem Bildimpuls beginnend, werden im Zeilenzähler die Zeilen von 0 bis 624 gezählt. Da eine Reihe von Zeilen bezüglich der einzuführenden Zusatzdatensignale ähnliche Struktur aufweisen, wird mit der Zeilennummer durch den Zeilentyp-EPROM 3.2 der Adreßbereich des Signal-EPROMs 3.1 angesprochen, der eine in die jeweilige Zeilenstruktur passende Signaleinfügung generiert.

In Fig. 3 sind im Boden des Synchronimpulses die Signale für sechs Datensymbole, hinter dem Farbburst die Signale für drei Datensymbole und auf der vorderen Schwarzschulter das Signal für ein Datensymbol eingefügt.

Für den in Fig. 4 dargestellten Zeilentyp sind im Boden des Synchronimpulses die Signale für sechs Datensymbole, auf der hinteren Schwarzschulter die Signale für acht Datensymbole und auf der vorderen Schwarzschulter das Signal für Datensymbol eingefügt. Da eine Reihe von Zeilen identische Strukturen besitzen, können für diese Zeilen identische Signalstrukturen im Signal-EPROM 3.1 abgelegt werden. Gleichzeitig werden durch den Taktzähler die Systemtaktflanken ST in der Zeit gezählt, z. B. 576 Takte je Zeile. Mit dem Systemtakt ST und der Auswahl des Zeilentyps ZT werden die vorher im Signal-EPROM 3.1 abgelegten Signale Spreizerlaubnis se, Spreizsignal sp und Datentakt zeitlich Systemtaktflanke für Systemtaktflanke ausgelesen und dem Digital-Analog-Converter 8 zugeführt.

Die Möglichkeit, die informationstragenden Zusatzdatensignale exakt in die gewünschten Zeitabschnitte des gesamten Bildes einpassen zu können, basiert auf der hochpräzisen Ableitung von Bildimpuls BI, Zeilenimpuls ZI und Systemtakt ST aus dem FBAS-Signal, welches in die Sendersynchronisation 12 eingespeist wird. Der Kern der Sendersynchronisation ist ein Synchronprozessor, z. B. der Schaltkreis TDA 9257, der einen Prozessortakt von 27 MHz, ein Horizontalsignal HS und ein Vertikalsignal VS mit einem Jitter kleiner 5 ns zur weiteren Verarbeitung aus dem FBAS-Signal ableitet. Diese Signale werden in den Baugruppen Teiler für Systemtakt 6, Bildimpulsdetektor 5 und Zeilenimpulsdetektor 7 in einer solchen Weise kombinatorisch und sequentiell miteinander verknüpft, daß zum Beispiel ein Systemtakt ST von 9 MHz mit 576 Systemtaktflanken je TV-Zeilensignal, der Zeilenimpuls ZI, welcher jede zeilenerste Flanke des Systemtaktes ST markiert und das Bildimpulssignal BI, welches jede bilderste Flanke des Systemtaktes markiert, erhalten wird.

Neben dem letztendlich zeitgesteuerten Aufruf der Signale Spreizerlaubnis se und Spreizsignal sp stehen die Signale BI, ZI und ST für die Anpassung zwischen Ausgabegeschwindigkeit der Datenquelle, deren Daten zu übertragen sind und dem Datentakt des datengesteuerten Zeilenselektiven Spreizfolgengenerators mit beispielsweise einem FIFO-Schaltkreis zur Verfügung.

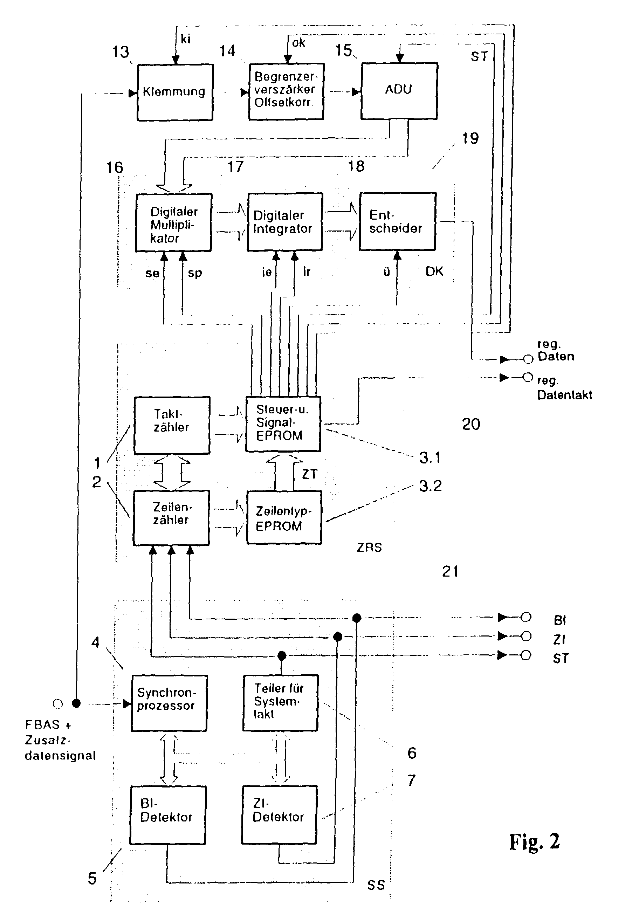

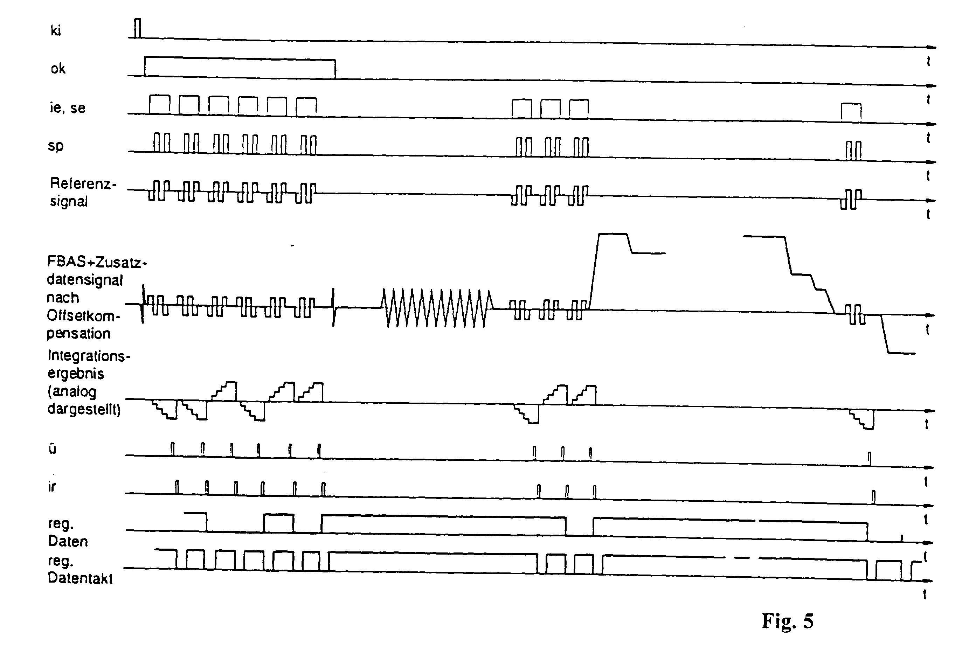

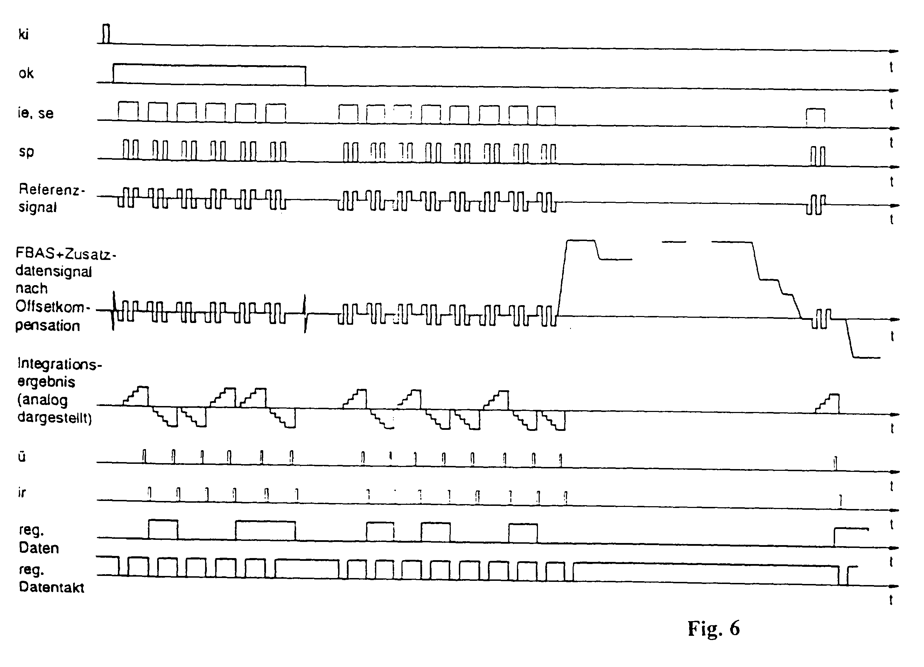

Fig. 2 zeigt den empfangsseitig zu betreibenden Zusatzdatenempfänger, wobei die Verarbeitung der Signale im Empfänger sowie die Signale zu dessen Steuerung in der Fig. 5 für den ersten Zeilentyp und in Fig. 6 für einen anderen Zeilentyp dargestellt ist. Dieser Zusatzdatenempfänger besteht aus der Empfängersynchronisation 21, dem zeilenselektiven Referenz-Spreizfolgengenerator 20 und dem Analogeingangsteil, der sich wiederum aus Klemmung 13, Begrenzerverstärker/Offsetkorrektur 14, Analog-Digital-Umsetzer 14 und dem digitalen Korrelator 19 zusammensetzt.

Die Klemmung kann mit der Zählung der Taktflanken in der Zeile durch den Takt zähler 1 und das Auslesen des entsprechenden Speicherinhaltes aus dem Steuer- und Signal-EPROM 3.1 aktiviert werden. Nachdem die Summe von FBAS-Signal und Zusatzdatensignal die Klemmschaltung 13 passiert hat, erfolgt durch den Begrenzerverstärker 14 eine Verstärkung, Begrenzung und Offsetkorrektur in einer solchen Weise, daß der Wandlerbereich des nachfolgenden ADU optimal während des Vorhandenseins der Zusatzdatensignale genutzt wird, ohne daß Übersteuerungen auftreten können (Fig. 5 und 6).

Gesteuert wird diese Offsetkorrektur mit dem aus dem Steuer- und Signal-EPROM 3.1 ausgelesenen Signal Offsetkorrektur ok. Die Folge der Abtastwerte gelangt in einer bestimmten Wortbreite an den digitalen Multiplikator 16, wo das Ausgangssignal des Begrenzerverstärkers mit dem Referenzsignal in Form der zugeführten Signale Spreizerlaubnis se und Spreizfolge sp in digitaler Form multipliziert wird.

Das Produkt wird nachfolgend durch den digitalen Integrator 17 integriert. Das Integrationsergebnis ist in analoger Darstellung in den Fig. 5 und 6 zu sehen. Die Freigabe des Integrators erfolgt durch die aus dem Steuer- und Signal-EPROM 3.1 ausgelesene Integrationsserlaubnis ie, das Rücksetzen durch das Integrator-Reset ir und die Entscheidung durch den Übernahmeimpuls ü. Bis auf die Tatsache, daß für den Empfangsvorgang nur ein Referenz-Spreizfolgensignal mit sp und se und die bereits benannten Steuersignale ie, ir, ü, ki und ok benötigt werden, entspricht der zeilenselektive Referenz-Spreizfolgengenerator 20 dem datengesteuerten zeilenselektiven Spreizfolgengenerator 11.

Neben den letztendlich regenerierten Daten und aus dem Steuer- und Signal-EPROM 3.1 ausgelesenen regenerierten Datentakt (Fig. 5 und 6) stehen die Signale BI, ZI und ST für die Anpassung der Datenausgabegeschwindigkeit des Zusatzdatenempfängers an den Datentakt der nachfolgenden Datensenke mit beispielsweise einem FIFO-Schaltkreis zur Verfügung.

Für die Sendersynchronisation werden aus dem FBAS-Signal durch das Zusammenwirken des Synchronprozessors 4, des Teilers für Systemtakt 6, des Bildimpuls-Detektors 5 und des Zeilenimpuls-Detektors 7 die Signale Bildimpuls BI, Zeilenimpuls ZI und Systemtakt ST erhalten, wodurch eine exakte Positionierung des Zusatzdatensignals innerhalb des gesamten TV-Bildes mit einer Genauigkeit kleiner 5 ns ermöglicht wird.

Im datengesteuerten zeilenselektiven Spreizfolgengenerator 20 kann unter Benutzung der Signale Bildimpuls BI, Zeilenimpuls ZI und Systemtakt ST, eines Zeilenzählers 2 und eines Taktzählers 1 das gesamte TV-Bild mit einem zeitlichen Raster von z. B. 111,$\overline{1}$ ns vollständig durchadressiert werden, wodurch die Zusatzdatensignale, beliebig wählbar bzw. über EPROM programmierbar, in die TV-Bild-Struktur eingepaßt werden können. Wird über den Zeilenzähler 2 der Zeilentyp mit Hilfe eines Zeilentyp-EPROM 3.2 ausgewählt, kann der Speicherumfang für den Signalteil des Signal- und Steuer-EPROM 3.1 beträchtlich verringert werden.

Für die Empfangssynchronisation werden aus dem FBAS-Signal durch das Zusammenwirken des Synchronprozessors 4, des Teilers für Systemtakt 6, des Bildimpuls-Detektors 5 und des Zeilenimpuls-Detektors 7 die Signale Bildimpuls BI, Zeilenimpuls ZI und Systemtakt ST erzeugt, wodurch eine zeitlich exakte Positionierung des Referenzsignales für den Korrelationsempfang innerhalb des gesamten TV-Bildes mit einer Genauigkeit kleiner 5 ns möglich wird.

Unter Benutzung der Signale Bildimpuls BI, Zeilenimpuls ZI und Systemtakt ST, eines Zeilenzählers 2 und eines Taktzählers 1 kann das gesamte TV-Bild im zeilenselektiven Referenz-Spreizfolgengenerator vollständig durchadressiert werden, wodurch die Zusatzdatensignale beliebig wählbar bzw. über EPROM programmierbar in der TV-Bild-Struktur durch den digitalen Korrelationsempfänger 19 empfangen werden können.

Mit der gleichen Präzision werden auch die Steuersignale Klemmimpuls ki, Offsetkompensation ok, Systemtakt zur AD-Umsetzung, Spreizerlaubnis se, Spreizsignal sp, Integrationserlaubnis ie, Integratorreset ir und Übernahme ü, die für die Eingangsstufen, den ADU und digitalen Korrelationsempfänger erforderlich sind, generiert.

Die Klemmung 13, die mittels einer exakten Zeitsteuerung durch den Klemmimpuls ki gewährleistet ist, ermöglicht die weitere optimale Verarbeitung des Gemisches aus FBAS-Signal und Zusatzdatensignal. Der Begrenzerverstärker/Offsetkompensation 14 verstärkt dieses Gemisch in den Eingangsstufen so, daß während des Synchronimpulses der FBAS-Pegel, gesteuert durch das Signal Offsetkompensation, auf den Mittelwert von 0 Volt angehoben wird. Entsprechend des Pegels der Zusatzdatensignale erfolgt hier eine solche Verstärkung, daß der ADU-Eingangswandlerbereich einschließlich möglicher Rauschstörungen optimal ausgenutzt wird. Die Begrenzung des Verstärkers schützt den ADU vor Zerstörung in den Zeiten, da Chrominanz und Luminanz übertragen werden.

Die Übertragung der Zusatzdaten erfolgt unter Benutzung von Biphase-Signalen, so daß beim Empfang auch bei nicht exakter Klemmung und Offsetkompensation eine Übertragung mit niedriger Fehlerrate mit Zusatzdatensignal-Pegeln von wenigen mV durch Mittelwertbildung infolge Integration möglich wird.

Die Programmierbarkeit des Zusatzdatenübertragungssystems erlaubt die einfache Anpassung an SECAM, NTSC, PAL und PALplus.

Die Signale Bildimpuls BI, Zeilenimpuls ZI und Systemtakt ST stehen sowohl auf der Sendeseite als auch auf der Empfangsseite für Geschwindigkeitsanpassungen zwischen Quelle und Übertragungssystem bzw. Übertragungssystem und Senke sowie für Rahmen- und Überrahmensynchronisation zur Verfügung.

**Verzeichnis der verwendeten Bezugszeichen:**

| 1. | Taktzähler für Systemtakt ST |
|---|---|
| 2 | Zeilenzähler |
| 3.1 | auf der Sendeseite: Signal-EPROM auf der Empfangsseite: Steuer- und Signal-EPROM |
| 3.2 | Zeilentyp-EPROM |
| 4 | Synchronprozessor |
| 5 | Bildimpuls-Detektor |
| 6 | Teiler für Systemtakt |
| 7 | Zeilenimpuls-Detektor |
| 8 | Digital-Analog-Converter mit Pegeleinstellung |
| 9 | Sendefilter |
| 10 | Addierer |
| 11 | Datengesteuerter Zeilenselektiver Spreizfolgegenerator |
| 12 | Sender-Synchronisation |
| 13 | Klemmung für FBAS-Signal |
| 14 | Begrenzerverstärker |
| 15 | Analog-Digital-Umsetzer |
| 16 | digitaler Multiplikator |
| 17 | Digitaler Integrator |
| 18 | Entscheider |
| 19 | Digitaler Korrelator |
| 20 | Zeilenselektiver Referenzspreizfolgen-Generator |
| 21 | Empfängersynchronisation |
| BI | Bildimpuls |
| ZI | Zeilenimpuls |
| ST | Systemtakt |
| se | Spreizerlaubnissignal |
| sp | Spreizfolgensignal |
| ki | Klemmimpuls |
| ok | Offsetkompensation |
| ie | Integrationserlaubnis |
| se | Spreizerlaubnis |
| sp | Spreizsignal |
| ü | Übernahme |
| ir | Integratorreset |
| ST | Systemtakt zur AD-Umsetzung |

**Patentansprüche**

**1.** Verfahren zur Übertragung von Zusatzdaten in TV-Bildern mit folgenden Verfahrensschritten:

a) für jedes FBAS-Signal eines zu übertragenden Bildes werden vorbestimmte Zeilenstrukturdaten gespeichert, die jeweils die farb- und/oder bildsignalfreien Zeitabschnitte in dem jeweiligen FBAS-Signal enthalten,

b) Ableiten eines Bildimpulses (BI) und von Zeilenimpulsen (ZI) aus den zu übertragenden FBAS-Signalen des zu übertragenden Bildes,
c) unter Ansprechen auf den Bildimpuls (BI) werden die Zeilenimpulse (ZI) gezählt,
d) in Abhängigkeit von dem Bildimpuls und dem ersten Zeilenimpuls werden die für das erste FBAS-Signal des zu übertragenden Bildes gespeicherten Zeilenstrukturdaten ausgewählt,
e) in Abhängigkeit von den ausgewählten Zeilenstrukturdaten des ersten FBAS-Signals werden die einzufügenden Zusatzdaten im Rhythmus eines vorbestimmten Datentaktes in die farb- und/oder bildsignalfreien Zeitabschnitte des ersten FBAS-Signals eingefügt,
f) die Zusatzdaten werden in dem ersten FBAS-Signal mit Signalpegeln übertragen, die ein Übersteuern handelsüblicher TV-Geräte verhindern und
g) Wiederholen der Schritte d) bis f) für jedes weitere FBAS-Signal des zu übertragenden Bildes.

**2.** Verfahren nach Anspruch 1, dadurch gekennzeichnet, daß die in Schritt a) abgelegten Zeilenstrukturdaten ein Spreizerlaubnissignal (se) enthalten, das die zeitliche Position und die Anzahl der in den farbund/oder bildsignalfreien Zeitabschnitten des jeweiligen FBAS-Signals zu übertragenden Zusatzdaten definiert, daß in Schritt a) ferner zwei Spreizfolgen vorbestimmter Länge abgelegt sind, daß in Schritt b) aus den FBAS-Signalen ein Systemtaktsignal abgeleitet wird und daß Schritt d) folgende Schritte umfaßt:

- die einzufügenden Zusatzdaten werden mit Hilfe der entsprechenden Spreizfolge gespreizt (sp) und
- die gespreizten Zusatzdaten werden zusammen mit dem Spreizerlaubnissignal unter der Zeitsteuerung des Systemtaktsignals in ein analoges und bandbegrenztes Zusatzdatensignal umgesetzt und anschließend in die Farbund bildsignalfreien Zeitabschnitte des ersten FBAS-Signals eingefügt.

**3.** Verfahren nach Anspruch 1 oder 2, dadurch gekennzeichnet, daß die Signalpegel der Zusatzdaten kleiner als 20 mV sind.

**4.** Verfahren nach einem der Ansprüche 1. bis 3, dadurch gekennzeichnet, daß die Zusatzdaten Bild- und Tonsignale umfassen, die im Zeitmultiplex in das FBAS-Signal eingefügt werden.

**5.** Verfahren nach einem der Ansprüche 1 bis 4, dadurch gekennzeichnet, daß die Zusatzdaten, vor dem Einfügen in das FBAS-Signal, gespeichert, gepuffert und komprimiert werden.

6. Verfahren nach einem der Ansprüche 1 bis 5, gekennzeichnet durch folgende empfangsseitig ausgeführten Schritte:

a) für jedes FBAS-Signal des zu empfangenden Bildes werden die gleichen, sendeseitig vorbestimmten Zeilenstrukturdaten gespeichert, die jeweils die Farb- und/oder bildsignalfreien Zeitabschnitte in dem jeweiligen FBAS-Signal enthalten,

b) Wiedergewinnen des Bildimpulses (BI), der Zeilenimpulse (ZI) und des Systemtaktes aus den empfangenen, die Zusatzdaten enthaltenden FBAS-Signalen,

c) unter Ansprechen auf den Bildimpuls werden die Zeilenimpulse gezählt,

d) in Abhängigkeit von dem Bildimpuls und dem ersten Zeilenimpuls werden die für das erste empfangene, die Zusatzdaten enthaltende FBAS-Signal gespeicherten Zeilenstrukturdaten ausgewählt,

e) die Zusatzdaten werden aus dem ersten empfangenen FBAS-Signal zurückgewonnen, indem die dem ersten empfangenen FBAS-Signal zugeordneten Zeilenstrukturdaten mit dem ersten empfangenen FBAS-Signal korreliert werden, und

f) Wiederholen der Schritte d) und e) für jedes weitere empfangene, Zusatzdaten enthaltende FBAS-Signal.

7. Verfahren nach Anspruch 6, dadurch gekennzeichnet, daß die in Schritt a) abgelegten Zeilenstrukturdaten das jeweilige sendeseitig verwendete Spreizerlaubnissignal (se) enthalten, das die zeitliche Position und die Anzahl der in den farb- und/oder bildsignalfreien Zeitabschnitten des jeweiligen FBAS-Signals zu empfangende Zusatzdaten definiert, daß in Schritt a) ferner eine der beiden sendeseitig verwendeten Spreizfolgen abgelegt wird, daß vor der Durchführung des Schrittes e) das empfangene, Zusatzdaten enthaltende FBAS-Signal geklemmt, in der Amplitude begrenzt und in ein digitales Signal umgesetzt wird, und daß der Korrelationsschritt e) ein Multiplizieren des empfangenen FBAS-Signals mit dem entsprechenden Spreizerlaubnissignal und mit der vorbestimmten Spreizfolge, ein Integrieren über die durch das entsprechende Spreizerlaubnissignal definierte Dauer und ein Entscheiden umfaßt.

8. Verfahren nach Anspruch 4 und 6 oder 7, dadurch gekennzeichnet, daß die Bild- und Tonsignale enthaltenden Zusatzdaten demultiplext werden.

9. Sendevorrichtung zum Durchführen des Verfahrens nach einem der Ansprüche 1 bis 5, wobei die Sendevorrichtung in einem gewöhnlichen TV-Sender implementierbar ist, mit folgenden Merkmalen;

- eine Sender-Synchronisationseinrichtung (12) zum Erzeugen von Bildimpulsen (BI) und Zeilenimpulsen (ZI) aus den angelegten FBAS-Signalen eines zu übertragenden TV-Bildes,

- ein Zeilenzähler (2), an dessen erstem Eingang die Bildimpulse und an dessen zweitem Eingang die Zeilenimpulse anliegen, um die FBAS-Signale des zu übertragenden TV-Bildes zu zählen,

- eine mit dem Zeilenzähler (2) verbundene Speichereinrichtung (3.1; 3.2) , in der die Zeilenstrukturdaten für jedes FBAS-Signal des zu übertragenden Bildes, die jeweils die Farb- und bildsignalfreien Zeitabschnitte in dem jeweiligen FBAS-Signal enthalten, und ein vorbestimmtes Datentaktsignal abgelegt sind, und

- ein Addierer (10), an dessen einem Eingang das aktuell zu übertragende FBAS-Signal und an dessen anderem Eingang die in das FBAS-Signal einzufügenden Zusatzdaten während der Farb- und/oder bildsignalfreien Zeitabschnitte des jeweiligen FBAS-Signals im Rhythmus des Datentaktes anliegen, wobei die Signalpegel der Zusatzdaten begrenzt sind, um ein Übersteuern handelsüblicher TV-Geräte zu vermeiden.

10. Sendevorrichtung nach Anspruch 9, dadurch gekennzeichnet, daß die Sender-Synchronisationseinrichtung (12) umfaßt:

- einen Synchronprozessor (4), der ein vorbestimmtes Prozessortaktsignal, ein Vertikalsignal und ein Horizontalsignal aus den FBAS-Signalen ableitet,

- eine Teilereinrichtung (6) zum Erzeugen eines vorbestimmten Systemtaktsignals aus dem Prozessortaktsignal, wobei jedem FBAS-Signal eine vorbestimmte Anzahl von Systemtakten zugeordnet ist,

- einen Zeilenimpulsdetektor (7) zum Erzeugen der Zeilenimpulse aus dem Horizontalsignal, wobei jeder Zeilenimpuls die erste Flanke des Systemtaktsignals in dem jeweiligen FBAS-Signal markiert,

- einen Bildimpulsdetektor (5) zum Erzeugen der Bildimpulse aus dem Vertikalsignal, wobei jeder Bildimpuls die erste Flanke des Systemtaktsignals eines neuen Bildes markiert, und daß die Sendevorrichtung einen mit der Speichereinrichtung (3.1; 3.2) verbundenen Systemtaktzähler (1) zum Zählen der einem FBAS-Signal zugeordneten Systemtakte aufweist.

11. Sendevorrichtung nach Anspruch 9 oder 10, dadurch gekennzeichnet, daß die für jedes FBAS-Signal gespeicherten Zeilenstrukturdaten ein Spreizerlaubnissignal enthalten, das die zeitliche Position und die Anzahl der in den jeweiligen farb- und/oder bildsignalfreien Zeitabschnitten zu übertragenden Zusatzdaten definiert, und daß in der Speichereinrichtung (3.1; 3.2) zwei Spreizfolgen vorbestimmter Länge abgelegt sind, mit denen die zu übertragenden Zusatzdaten spreizbar sind.

12. Sendevorrichtung nach Anspruch 9 bis 11, gekennzeichnet durch einen Digital-/Analogwandler (8) zum Umsetzen der zu übertragenden Zusatzdaten in ein analoges Zusatzdatensignal mit vorbestimmtem Signalpegel und durch ein Filter (9) zum Bandbegrenzen des analogen Zusatzdatensignals.

13. Empfangsvorrichtung zum Durchführen des Verfahrens nach einem der Ansprüche 6 bis 8, wobei die Empfangsvorrichtung in einem gewöhnlichen TV-Empfänger implementierbar ist, mit folgenden Merkmalen:

- eine Empfänger-Synchronisationseinrichtung (21) zum Erzeugen von Bildimpulsen und Zeilenimpulsen aus den empfangenen, die Zusatzdaten enthaltenden FBAS-Signalen,
- ein Zeilenzähler (2), an dessen erstem Eingang die Bildimpulse und an dessen zweitem Eingang die Zeilenimpulse anliegen, um die empfangenen FBAS-Signale jedes TV-Bildes zu zählen,
- eine mit dem Zeilenzähler (2) verbundene Speichereinrichtung (3.1; 3.2), in der die Zeilenstrukturdaten für jedes empfangene FBAS-Signal, die jeweils die farb- und/oder bildsignalfreien Zeitabschnitte in dem jeweiligen FBAS-Signal enthalten, und mehrere vorbestimmte Steuersignale abgelegt sind,
- ein Korrelationsempfänger (19) zum Wiedergewinnen der Zusatzdaten aus dem aktuell empfangenen FBAS-Signal, an dessen einem Eingang das aktuell empfangene, Zusatzdaten enthaltende FBAS-Signal und an dessen anderem Eingang die zu dem FBAS-Signal gehörenden Zeilenstrukturdaten und Steuersignale anliegen.

14. Empfangsvorrichtung nach. Anspruch 13, dadurch gekennzeichnet, daß die für jedes FBAS-Signal gespeicherten Zeilenstrukturdaten das jeweils senderseitig verwendete Spreizerlaubnissignal enthalten, das die zeitliche Position und die Anzahl der in den jeweiligen farb- und/oder bildsignalfreien Zeitabschnitten zu empfangenden Zusatzdaten definiert,

daß in der Speichereinrichtung (3.1; 3.2) eine der senderseitig verwendeten Spreizfolgen abgespeichert ist,
daß der Korrelationsempfänger (19) einen digitalen Multiplizierer (16), an dessen erstem Eingang das empfangene FBAS-Signal, an dessen zweitem Eingang das entsprechende Spreizerlaubnissignal und an dessen drittem Eingang die Spreizfolge anliegt, einen durch die Steuersignale gesteuerten digitalen Integrator (17) und eine gesteuerte Entscheidungseinrichtung (18) aufweist.

15. Empfangsvorrichtung nach Anspruch 13 oder 14, dadurch gekennzeichnet, daß die Empfänger-Synchronisationseinrichtung (21) umfaßt:

- einen Sychronprozessor (4), der ein vorbestimmtes Prozessortaktsignal, ein Vertikalsignal und ein Horizontal signal aus den empfangenen FBAS-Signalen ableitet,
- eine Teilereinrichtung (6) zum Erzeugen eines vorbestimmten Systemtaktsignals aus dem Prozessortaktsignal, wobei jedem FBAS-Signal eine vorbestimmte Anzahl von Systemtakten zugeordnet ist,
- einen Zeilenimpulsdetektor (7) zum Erzeugen der Zeilenimpulse aus dem Horizontalsignal, wobei jeder Zeilenimpuls die erste Flanke des Systemtaktsignals in dem jeweiligen FBAS-Signal markiert,
- einen Bildimpulsdetektor (5) zum Erzeugen der Bildimpulse aus dem Vertikalsignal, wobei jeder Bildimpuls die erste Flanke des Systemtaktsignals eines neuen Bildes markiert, und daß

die Empfangsvorrichtung einen mit der Speichereinrichtung (3.1; 3.2) verbundenen Systemtaktzähler (1) zum Zählen der einem empfangenen FBAS-Signal zugeordneten Systemtakte aufweist.

16. Empfangsvorrichtung nach einem der Ansprüche 13 bis 15, dadurch gekennzeichnet, daß dem Korrelationsempfänger (19) eine Klemmschaltung (13), eine Einrichtung zur Offsetkompensation und zur Signalpegelbegrenzung (14) sowie ein Analog-/Digitalwandler (15) vorgeschaltet ist.

17. System zu Übertragung von Zusatzdaten in TV-Bildern umfassend eine Sendevorrichtung nach einem der Ansprüche 9 bis 11 und eine Empfangsvorrichtung nach einem der Ansprüche 13 bis 16.

**Claims**

1. Process for the transmission of additional data in TV images comprising the following process steps:

a) for each composite colour signal of an image to be transmitted, predetermined line-structure data are stored, said line-structure data containing the colour- and/or image-signal-free time portions in the respective composite colour signal;

b) derivation of an image pulse (BI) and of line pulses (ZI) from the composite colour signals to be transmitted of the image to be transmitted;

c) in responding to the image pulse (BI), the line pulses (ZI) are counted;

d) the line-structure data stored for the first composite colour signal of the image to be transmitted are selected as a function of the image pulse and the first line pulse;

e) as a function of the selected line-structure data of the first composite colour signal, the additional data to be inserted are inserted, at the rate of a predetermined data clock, into the colour- and/or image-signal-free time portions of the first composite colour signal;

f) the additional data are transmitted in the first composite colour signal at signal levels which prevent the overloading of commercially available TV sets; and

g) repetition of steps d) to f) for each further composite colour signal of the image to be transmitted.

2. Process according to claim 1, characterized in that the line-structure data stored in step a) contain a spread-permissive signal (se) which defines the time-related position and the number of additional data to be transmitted in the colour- and/or image-signal-free time portions of the respective composite colour signal, wherein, in step a), two spread sequences of predetermined length are additionally stored, wherein, in step b), a system-clock signal is derived from the composite colour signals and wherein step d) comprises the following steps:

- the additional data to be inserted are spread (sp) with the aid of the corresponding spread sequence and

- having been spread, the additional data are converted, together with the spread-permissive signal under the timing control of the system-clock signal, into an analog and band-limited additional-data signal and are then inserted into the colour- and/or image-signal-free time portions of the first composite colour signal.

3. Process according to claim 1 or 2, characterized in that the signal levels of the additional data are smaller than 20 mV.

4. Process according to any one of claims 1 to 3, characterized in that the additional data comprise image and sound signals which are inserted by time-division multiplexing into the composite colour signal.

5. Process according to any one of claims 1 to 4, characterized in that, prior to insertion into the composite colour signal, the additional data are stored, buffered and compressed.

6. Process according to any one of claims 1 to 5, characterized by the following steps executed at the receiving end:

a) the same line-structure data, predetermined at the transmitting end, are stored for each composite colour signal of the image to be received, said line-structure data containing the colour- and/or image-signal-free time portions in the respective composite colour signal;

b) recovery of the image pulse (BI), line pulses (ZI) and system clock from the received composite colour signals containing the additional data;

c) in responding to the image pulse, the line pulses are counted;

d) the line-structure data stored for the first received composite colour signal containing the additional data are selected as a function of the image pulse and the first line pulse;

e) the additional data are recovered from the first received composite colour signal in that the line-structure data associated with the first received composite colour signal are correlated with the first received composite colour signal; and

f) repetition of steps d) and e) for each further received composite colour signal containing additional data.

7. Process according to claim 6, characterized in that the line-structure data stored in step a) contain the respective spread-permissive signal (se) used at the transmitting end, which spread-permissive signal defines the time-related position and the number of additional data to be received in the colour- and/or image-signal-free time portions of the respective composite colour signal, wherein, in step a), one of the two spread sequences used at the transmitting end is additionally stored, wherein, prior to the execution of step e), the received composite colour signal containing additional data is clamped, limited in amplitude and converted into a digital signal, wherein the correlation step e) comprises a multiplication of the received composite colour signal by the corresponding spread-permissive signal and by the predetermined spread sequence, an integration over the duration defined by the corresponding spread-permissive signal, and a decision-making.

8. Process according to claims 4 and 6 or 7, characterized in that the additional data containing image and sound signals are demultiplexed.

9. Transmission device for the execution of the process according to any one of claims 1 to 5, the transmission device being implementable in a normal TV transmitter and comprising the following features:

- a transmitter-synchronization apparatus (12) for generating image pulses (BI) and line pulses (ZI) from the created composite colour signals of a TV image to be transmitted;
- a line counter (2) to the first input of which are applied the image pulses and to the second input of which are applied the line pulses, in order to count the composite colour signals of the TV image to be transmitted;
- a storage apparatus (3.1; 3.2) connected to the line counter (2), said storage apparatus (3.1; 3.2) storing both the line-structure data for each composite colour signal of the image to be transmitted - said line-structure data containing the colour- and/or image-signal-free time portions in the respective composite colour signal - and also a predetermined data-clock signal; and
- an adder (10) to the one input of which is applied the composite colour signal currently to be transmitted and to the other input of which are applied the additional data to be inserted into the composite colour signal during the colour- and/or image-signal-free time portions of the respective composite colour signal at the rate of the data clock, wherein the signal levels of the additional data are limited in order to prevent overloading of commercially available TV sets.

10. Transmission device according to claim 9, characterized in that the transmitter-synchronization apparatus (12) comprises:

- a synchronous processor (4), which derives a predetermined processor-clock signal, a vertical signal and a horizontal signal from the composite colour signals;
- a divider apparatus (6) for generating a predetermined system-clock signal from the processor-clock signal, each composite colour signal being associated with a predetermined number of system clocks;
- a line-pulse detector (7) for generating the line pulses from the horizontal signal, each line pulse marking the first edge of the system-clock signal in the respective composite colour signal;
- an image-pulse detector (5) for generating the image pulses from the vertical signal, each image pulse marking the first edge of the system-clock signal of a new image, wherein the transmission device comprises a system-clock counter (1), connected to the storage apparatus (3.1; 3.2), for counting the system clocks associated with a composite colour signal.

11. Transmission device according to claim 9 or 10, characterized in that the line-structure data stored for each composite colour signal contain a spread-permissive signal which defines the time-related position and the number of additional data to be transmitted in the respective colour- and/or image-signal-free time portions, wherein stored in the storage apparatus (3.1; 3.2) are two spread sequences of predetermined length with which the additional data to be transmitted can be spread.

12. Transmission device according to claims 9 to 11, characterized by a digital/analog converter (8) for converting the additional data to be transmitted into an analog additional-data signal with predetermined signal level and by a filter (9) for band limitation of the analog additional-data signal.

13. Reception device for the execution of the process according to any one of claims 6 to 8, the reception device being implementable in a normal TV receiver and comprising the following features:

- a receiver-synchronization apparatus (21) for generating image pulses and line pulses from the received composite colour signals containing the additional data;
- a line counter (2) to the first input of which are applied the image pulses and to the second input of which are applied the line pulses, in order to count the received composite colour signals of each TV image;
- a storage apparatus (3.1; 3.2) connected to the line counter (2), said storage apparatus (3.1; 3.2) storing both the line-structure data for each received composite colour signal - said line-structure data containing the colour- and/or image-signal-free time portions in the respective composite colour signal - and also a plurality of predetermined control signals;
- a correlation receiver (19) for recovering the additional data from the currently received composite colour signal, to the one input of which correlation receiver (19) is applied the currently received composite colour signal containing additional data and to the other input of which are applied the line-structure data and control signals belonging to the composite colour signal.

14. Reception device according to claim 13, characterized in that the line-structure data stored for each composite colour signal contain the respective spread-permissive signal used at the transmitting end, said spread-permissive signal defining the time-related position and the number of additional data to be received in the respective colour- and/or image-signal-free time portions, wherein stored in the storage apparatus (3.1; 3.2) is one of the spread sequences used at the transmitting end;
the correlation receiver (19) comprises a digital multiplier (16) - to the first input of which is applied the received composite colour signal and to the second input of which is applied the corresponding spread-permissive signal and to the third input of which is applied the spread sequence -, a digital integrator (17) controlled by the control signals, and a controlled decision-making apparatus (18).

15. Reception device according to claim 13 to 14, characterized in that the receiver-synchronization apparatus (21) comprises:

    - a synchronous processor (4), which derives a predetermined processor-clock signal, a vertical signal and a horizontal signal from the received composite colour signals;
    - a divider apparatus (6) for generating a predetermined system-clock signal from the processor-clock signal, each composite colour signal being associated with a predetermined number of system clocks;
    - a line-pulse detector (7) for generating the line pulses from the horizontal signal, each line pulse marking the first edge of the system-clock signal in the respective composite colour signal;
    - an image-pulse detector (5) for generating the image pulses from the vertical signal, each image pulse marking the first edge of the system-clock signal of a new image,

    wherein the reception device comprises a system-clock counter (1), connected to the storage apparatus (3.1; 3.2), for counting the system clocks associated with a received composite colour signal.

16. Reception device according to any one of claims 13 to 15, characterized in that connected before the correlation receiver (19) are a clamping circuit (13), an apparatus for offset compensation and for signal-level limitation (14) and an analog/digital converter (15).

17. System for the transmission of additional data in TV images comprising a transmission device according to any one of claims 9 to 11 and a reception device according to any one of claims 13 to 16.

## Revendications

1. Procédé de transmission de données additionnelles dans des images de télévision comportant les pas suivants:

    a) pour chaque signal d'image en couleur d'une image à transmettre, sont enregistrées des données de structure de ligne prédéterminées qui contiennent les intervalles de temps dépourvus de signaux de couleur et/ou d'image dans chaque signal d'image en couleur;
    b) déduction d'une impulsion d'image (BI) et d'impulsions de lignes (ZI) des signaux d'image en couleur à transmettre de l'image à transmettre;
    c) les impulsions de lignes (ZI) sont comptées en fonction de l'impulsion d'image (BI);
    d) les données de structure de ligne enregistrées pour le premier signal d'image en couleur de l'image à transmettre sont choisies en fonction de l'impulsion d'image et de la première impulsion de ligne;
    e) les données additionnelles à insérer sont intégrées, en fonction des données de structure de ligne choisies du premier signal d'image en couleur et à un rythme de données prédéterminé, dans les intervalles de temps dépourvus de signaux de couleur et/ou d'image du premier signal d'image en couleur;
    f) les données additionnelles sont transmises dans le premier signal d'image en couleur avec des niveaux de signal qui empêchent une surcharge des postes de télévision d'usage courant et
    g) répétition des pas d) à f) pour chaque signal d'image en couleur de l'image à transmettre.

2. Procédé selon la revendication 1, caractérisé en ce que les données de structure de ligne enregistrées au pas a) contiennent un signal d'autorisation d'étalement (se) qui définit la position temporelle et le nombre des données additionnelles à transmettre dans les intervalles de temps dépourvus de signaux de couleur et/ou d'image de chaque signal d'image en couleur, caractérisé de plus en ce que, au pas a), deux séquences d'étalement de longueur prédéterminée sont enregistrées, en ce que, au pas b) un signal d'horloge système est déduit des signaux d'image en couleur et en ce que le pas d) comporte les pas suivants:

    - les données additionnelles à insérer sont étalées à l'aide de la séquence d'étalement correspondante (sp) et

- les données additionnelles étalées sont transposées avec le signal d'autorisation d'étalement et sous la commande temporelle du signal d'horloge système en un signal de données additionnelles analogique à bande limitée et intégrées par la suite dans les intervalles de temps dépourvus de signaux de couleur et/ou d'image du premier signal d'image en couleur.

3. Procédé selon la revendication 1 ou 2, caractérisé en ce que les niveaux de signal des données additionnelles sont inférieurs à 20 mV.

4. Procédé selon l'une des revendications 1 à 3, caractérisé en ce que les données additionnelles comportent des signaux image et son qui sont intégrés dans le signal d'image en couleur par multiplexage à répartition dans le temps.

5. Procédé selon l'une des revendications 1 à 4, caractérisé en ce que les données additionnelles sont enregistrées, bufferisées et comprimées avant d'être intégrées dans le signal d'image en couleur.

6. Procédé selon l'une des revendications 1 à 5, caractérisé en ce que les pas suivants sont effectués du côté réception:

   a) pour chaque signal d'image en couleur de l'image à recevoir, les mêmes données de structure de ligne prédéterminées du côté émission sont enregistrées qui contiennent chacune les intervalles de temps dépourvus de signaux de couleur et/ou d'image dans le signal d'image en couleur correspondant;
   b) récupération de l'impulsion d'image (BI), des impulsions de lignes (ZI) et de l'horloge système à partir des signaux d'image en couleur reçus contenant les données additionnelles;
   c) les impulsions de lignes sont comptées en fonction de l'impulsion d'image;
   d) en fonction de l'impulsion d'image et de la première impulsion de lignes, sont choisies les données de structure de ligne enregistrées pour le premier signal d'image en couleur reçu contenant les données additionnelles;
   e) les données additionnelles sont récupérées à partir du premier signal d'image en couleur reçu par corrélation des données de structure de ligne assignées au premier signal d'image en couleur reçu avec le premier signal d'image en couleur reçu;
   f) répétition des pas d) et e) pour chaque autre signal d'image en couleur reçu contenant des données additionnelles.

7. Procédé selon la revendication 6, caractérisé en ce que les données de structure de ligne enregistrées au pas a) contiennent le signal d'autorisation d'étalement utilisé du côté émission (se), qui définit la position temporelle et le nombre des données additionnelles à recevoir dans les intervalles de temps dépourvus de signaux de couleur et/ou d'image du signal d'image en couleur correspondant, caractérisé de plus en ce que, au pas a), l'une des deux séquences d'étalement utilisées du côté émission est enregistrée, en ce que, avant la réalisation du pas e), le signal d'image en couleur reçu contenant des données additionnelles est verrouillé, limité dans son amplitude et converti en un signal numérique et en ce que le pas de corrélation e) comporte la multiplication du signal d'image en couleur par le signal d'autorisation d'étalement correspondant et par la séquence d'étalement prédéterminée, l'intégration pendant la durée définie par le signal d'autorisation d'étalement correspondant et une décision.

8. Procédé selon l'une des revendications 4 et 6 ou 7, caractérisé en ce que les données additionnelles contenant des signaux image et son sont démultiplexées.

9. Dispositif d'émission destiné à appliquer le procédé selon l'une des revendications 1 à 5, le dispositif d'émission pouvant être réalisé dans un émetteur de télévision ordinaire, avec les caractéristiques suivantes:

   - une installation de synchronisation pour l'émetteur (12) destinée à générer des impulsions d'images (BI) et des impulsions de lignes (ZI) à partir des signaux d'image en couleur appliqués d'une image de télévision à transmettre;
   - un compteur de lignes (2) à la première entrée duquel sont appliquées les impulsions d'images et à la deuxième entrée, les impulsions de lignes pour compter les signaux d'image en couleur de l'image de télévision à transmettre;
   - une installation de stockage (3.1; 3.2) connectée au compteur de lignes (2), dans laquelle sont stockés les données de structure de ligne afférentes à chaque signal d'image en couleur de l'image à transmettre, qui contiennent dans chaque cas les intervalles de temps dépourvus de signaux de couleur et d'image dans le signal d'image en couleur correspondant, ainsi qu'un signal d'horloge de données prédéterminé;
   - un totalisateur (10) à l'une des entrées duquel est appliqué le signal d'image en couleur actuellement à transmettre, et à l'autre entrée duquel sont appliquées au rythme de l'horloge les données additionnelles à intégrer dans le signal d'image en couleur pendant les intervalles de temps dépourvus de signaux de couleur et/ou d'image de chaque signal d'image en couleur, les niveaux de signal des données additionnelles étant limités pour éviter que les postes de télévision d'usage courant ne subissent une surcharge.

10. Dispositif d'émission selon la revendication 9, caractérisé en ce que l'installation de synchronisation de l'émetteur comporte:

- un processeur synchrone (4) qui déduit des signaux d'image en couleur un signal d'horloge de processeur prédéterminé, un signal vertical et un signal horizontal;
- un diviseur de fréquence (6) destiné à générer un signal d'horloge système à partir du signal d'horloge de processeur, un nombre donné d'horloges systèmes étant assigné à chaque signal d'image en couleur;
- un détecteur d'impulsions de lignes (7) destiné à générer des impulsions de lignes à partir du signal horizontal, chaque impulsion de ligne marquant le premier flanc du signal d'horloge système dans le signal d'image en couleur correspondant;
- un détecteur d'impulsions d'images (5) destiné à générer les impulsions d'images à partir du signal vertical, chaque impulsion d'image marquant le premier flanc du signal d'horloge système d'une nouvelle image, et caractérisé en ce que le dispositif d'émission est muni d'un compteur d'horloge système (1) raccordé à l'installation de stockage (3.1; 3.2) pour le comptage des horloges systèmes assignées à un signal d'image en couleur.

11. Dispositif d'émission selon la revendication 9 ou 10, caractérisé en ce que les données de structure de ligne enregistrées pour chaque signal d'image en couleur contiennent un signal d'autorisation d'étalement qui définit la position temporelle et le nombre des données additionnelles à transmettre dans les intervalles de temps correspondants dépourvus de signaux de couleur et/ou d'image, de plus caractérisé en ce que deux séquences d'étalement de longueur prédéterminée sont enregistrées dans l'installation de stockage, grâce auxquelles les données additionnelles peuvent être étalées.

12. Dispositif d'émission selon les revendications 9 à 11, caractérisé en ce qu'il comporte un convertisseur analogique-numérique (8) destiné à convertir les données additionnelles à transmettre en un signal analogiquede données additionnelles à niveau de signal prédéterminé, ainsi qu'un filtre (9) destiné à limiter la bande du signal analogique de données additionnelles.

13. Dispositif de réception destiné à appliquer le procédé selon l'une des revendications 6 à 8, le dispositif de réception pouvant ête intégré dans un poste de télévision d'usage courant, et présentant les caractéristiques suivantes:

- une installation de synchronisation pour le récepteur (21) destinée à générer des impulsions d'images et des impulsions de lignes à partir des signaux d'image en couleur reçus contenant les données additionnelles;
- un compteur de lignes (2) à la première entrée duquel sont appliquées les impulsions d'images et à la deuxième entrée, les impulsions de lignes pour compter les signaux d'image en couleur reçus de chaque image de télévision;
- une installation de stockage (3.1; 3.2) raccordée au compteur de lignes (2), dans laquelle sont stockés les données de structure de ligne afférentes à chaque signal d'image en couleur reçu, qui contiennent dans chaque cas les intervalles de temps dépourvus de signaux de couleur et/ou d'image dans le signal d'image en couleur correspondant, ainsi que plusieurs signaux de commande prédéterminés;
- un récepteur de corrélation (19) destiné à récupérer les données additionnelles à partir du signal d'image en couleur actuellement reçu à l'une des entrées duquel est appliqué le signal d'image en couleur actuellement reçu contenant des données additionnelles et à l'autre entrée duquel sont appliquées les données de structure de ligne afférentes au signal d'image et les signaux de commande.

14. Dispositif de réception selon la revendication 13, caractérisé en ce que les données de structure de ligne enregistrées pour chaque signal d'image en couleur contiennent le signal d'autorisation d'étalement utilisé du côté émission qui définit la position temporelle et le nombre des données additionnelles à recevoir dans les intervalles de temps dépourvus de signaux de couleur et/ou d'image;

en ce que l'une des séquences d'étalement utilisées du côté émission est enregistrée dans l'installation de stockage (3.1; 3.2);
en ce que le récepteur de corrélation (19) comporte a) un multiplicateur numérique (16) à la première entrée duquel est appliqué le signal d'image en couleur reçu, à la deuxième, le signal d'autorisation d'étalement correspondant, et à la troisième, la séquence d'étalement, b) un intégrateur numérique commandé par les signaux de commande (17) et c) une installation de décision commandée (18).

15. Dispositif de réception selon l'une des revendications 13 ou 14, caractérisé en ce que l'installation de synchronisation du récepteur (21) comporte:

- un processeur synchrone (4) qui déduit des signaux d'image en couleur reçus un signal d'horloge de processeur prédéterminé, un signal vertical et un signal horizontal;
- un diviseur de fréquence (6) destiné à générer un signal d'horloge système prédéterminé à partir du signal d'horloge de processeur, un nombre donné d'horloges systèmes étant assigné à chaque signal d'image en couleur;
- un détecteur d'impulsions de lignes (7) destiné à générer les impulsions de lignes à partir du signal horizontal, chaque impulsion de ligne marquant le premier flanc du signal d'horloge système dans le signal d'image en couleur correspondant;
- un détecteur d'impulsions d'images (5) destiné à générer des impulsions d'images à partir du signal vertical, chaque impulsion d'image marquant le premier flanc du signal d'horloge système d'une nouvelle image,

et caractérisé en ce que le dispositif de réception est doté d'un compteur d'horloge système (1) raccordé à l'installation de stockage (3.1; 3.2) destiné à compter les horloges systèmes assignées à un signal d'image en couleur reçu.

16. Dispositif de réception selon l'une des revendications 13 à 15, caractérisé en ce que le récepteur de corrélation (19) est précédé d'un circuit de verrouillage (13), d'une installation destinée à compenser le décalage et à limiter le niveau de signal (14) ainsi que d'un convertisseur analogique-numérique (15).

17. Système destiné à transmettre des données additionnelles dans des images de télévision et comportant un dispositif d'émission selon l'une des revendications 9 à 11 et un dispositif de réception selon l'une des revendications 13 à 16.

**Fig. 1**

Fig. 2

EP 0 749 239 B1

BI

ZI

ST

1. Takt

64 µs

576. Takt

FBAS
Typ 1

Daten

Datentakt

se

sp

Zusatzdatensignal

FBAS+
Zusatzdatensignal

Fig. 3

Fig. 4

FBAS
(Typ2)

Daten

Datentakt

se

sp

Zusatzdatensignal

FBAS+
Zusatzdatensignal

EP 0 749 239 B1

Fig. 5

Fig. 6